# EUROPEAN PATENT APPLICATION

(11) **EP 4 800 081 A1**
(43) Date of publication of application: **02.09.2026**
(21) Application number: 24917100.0
(22) Date of filing: 03.09.2024
(51) Int. Cl.: C09D 183/04, C08F 2/44

(54) **HARD COATING MATERIAL, HARD COATING, AND STRUCTURE**

(30) Priority: 10.01.2024 JP 2024001916
(71) Applicant: Resonac Corporation, Tokyo 105-7325 (JP)
(72) Inventor: KIKKAWA, Chisato, Tokyo 105-7325 (JP); KOTAKE, Tomohiko, Tokyo 105-7325 (JP)
(74) Representative: Berggren Oy
(86) International application number: PCT/JP2024/031635
(87) International publication number: WO 2025/150225

(57) **Abstract**

A functional coating material includes a curable component, a polysiloxane compound having an amino group, and a polymerization inhibitor. The functional coating material may be a hard coating material. A hard coating consists of a cured product of the functional coating material. A structure includes a substrate and the hard coating provided on the substrate.

## Description

### Technical Field

The present invention relates to a hard coating material, a hard coating, and a structure. The present invention also relates to a functional coating material.

### Background Art

A method is known for imparting water repellency to a substrate such as glass or plastics by coating the surface of the substrate with a coating material including a fluorine-containing resin such as a polytetrafluoroethylene (PTFE) resin. Although a film of a fluorine-containing resin is excellent in water repellency, it is poor in abrasion resistance, and thus it has been difficult to use it as a hard coating. Therefore, an acrylic composition or the like containing a polyfunctional acrylic has been proposed as a hard coating material having water repellency (see Patent Literature 1 below).

### Citation List

### Patent Literature

Patent Literature 1: Japanese Unexamined Patent Publication No. 2015-34832

### Summary of Invention

### Technical Problem

Examples of objects on which a film such as a hard coating is to be formed include display device components such as touch panels; articles in buildings such as kitchens, bathtubs, toilets, and washrooms; exterior parts of buildings, automobiles, trains, and the like; and solar panels of solar cells. It is desirable that the coating material is transparent so as not to impair the appearance of these objects to which the coating material is applied. However, when the coating material is cured by irradiating it with light using a high-pressure mercury lamp, the film formed by the coating material may become cloudy. In addition, when the coating material is cured by heating, the curing rate is slower than when it is cured by light irradiation, so the film has a tendency to become more cloudy.

Therefore, an object of the present invention is to provide a functional coating material capable of forming a film (for example, a hard coating) in which cloudiness is suppressed. Another object of the present invention is to provide a hard coating in which cloudiness is suppressed, and a structure including the same.

### Solution to Problem

To solve the above problem, the present invention provides the following functional coating material, hard coating, and structure.
[1] A functional coating material including a curable component, a polysiloxane compound having an amino group, and a polymerization inhibitor.
[2] The functional coating material according to [1], wherein the curable component is a photocurable resin composition.
[3] The functional coating material according to [1], wherein the curable component is a thermosetting resin composition.
[4] The functional coating material according to any one of [1] to [3], wherein the polysiloxane compound having an amino group has an amine equivalent of 500 to 5000 g/mol.
[5] The functional coating material according to any one of [1] to [4], wherein the polymerization inhibitor is a catechol compound.
[6] The functional coating material according to any one of [1] to [5], wherein the polymerization inhibitor is an aminoxyl compound.
[7] The functional coating material according to any one of [1] to [6], which is a hard coating material.
[8] A hard coating consisting of a cured product of the functional coating material according to any one of [1] to [7].
[9] The hard coating according to [8], wherein the haze is 2 or less.
[10] A structure including a substrate and the hard coating according to [8] or [9] provided on the substrate.

### Advantageous Effects of Invention

According to the present invention, it is possible to provide a functional coating material capable of forming a film (for example, a hard coating) in which cloudiness is suppressed. The present invention can also provide a hard coating in which cloudiness is suppressed, and a structure including the same.

### Description of Embodiments

Hereinafter, a functional coating material, a hard coating, and a structure according to an embodiment of the present invention will be described.

In the present invention, a numerical range indicated using "to" includes the numerical values described before and after "to" as the minimum value and the maximum value, respectively. In a numerical range described stepwise in the present invention, an upper limit value or a lower limit value described in one numerical range may be replaced with an upper limit value or a lower limit value of another stepwise numerical range. In a numerical range described in the present invention, the upper limit value or the lower limit value of the numerical range may be replaced with a value shown in an example. "A or B" means that either A or B may be included, and both may be included. Unless otherwise specified, the materials exemplified in the present invention can be used alone or in combination of two or more. In the present invention, the content of each component in a composition means the total amount of a plurality of substances corresponding to each component present in the composition, unless otherwise specified.

### <Functional coating material>

The functional coating material of the present embodiment includes a curable component, a polysiloxane compound having an amino group, and a polymerization inhibitor. The functional coating material means a coating material capable of forming a film having functions such as stain resistance, transparency, water repellency, fingerprint resistance, and antifogging property.

According to the functional coating material according to one embodiment of the present invention, a film (hard coating) in which cloudiness is suppressed can be formed. When the functional coating material according to one embodiment of the present invention is a hard coating material, a hard coating in which cloudiness is suppressed can be formed. The reason why such an effect is achieved is not necessarily clear, but the inventors of the present invention speculate as follows.

That is, if the curing of the functional coating material is insufficient, unreacted substances exist in the functional coating material, and the aggregation of the unreacted substances causes the film (hard coating) to become cloudy. In addition, if the amount of light irradiation is increased to reduce unreacted substances in the functional coating material, reaction unevenness is likely to occur in the functional coating material, and in portions where the reaction proceeds slowly, the unreacted substances aggregate, causing the film (hard coating) to become cloudy. On the other hand, when the functional coating material contains a polymerization inhibitor, the curing rate of the functional coating material becomes slower. This is considered to make the curing reaction uniform throughout the functional coating material, reduce unreacted substances, and suppress cloudiness of the film (hard coating). However, the mechanism of the present invention is not limited to the above reasons.

### (Curable component)

The functional coating material contains a curable component. The curable component may be a photocurable resin composition or a thermosetting resin composition. From the viewpoint of increasing the degree of freedom of the substrate to which the functional coating material is applied (in other words, the substrate selectivity of the functional coating material), the curable component may be a photocurable resin composition, and may be an ultraviolet curable resin composition. The photocurable resin composition contains a polymerizable compound and a photopolymerization initiator, and can optionally contain additives such as an ultraviolet absorber, silica particles, a silane coupling agent, a curing agent, a curing accelerator, and a catalyst. From the viewpoint of improving heat resistance, the curable component may be a thermosetting resin composition. The thermosetting resin composition contains a polymerizable compound and a thermal polymerization initiator, and can optionally contain additives such as an ultraviolet absorber, silica particles, a silane coupling agent, a curing agent, a curing accelerator, and a catalyst.

From the viewpoint of improving hardness, the polymerizable compound may be a polyfunctional polymerizable compound having two or more polymerizable double bonds. Examples of the group including a polymerizable double bond include a (meth)acryloyl group and a vinyl group. The polymerizable compound may be a (meth)acrylic acid compound from the viewpoint of easily forming a film (hard coating) in which cloudiness is further suppressed.

Examples of the polyfunctional polymerizable compound include bifunctional polymerizable compounds such as hexamethylene diacrylate, 1,6-hexanediol diacrylate, 1,9-nonanediol diacrylate, (poly)tetramethylene glycol diacrylate, tricyclodecane dimethanol diacrylate, ethoxylated bisphenol A diacrylate, (poly)ethylene glycol di(meth)acrylate, diethylene glycol di(meth)acrylate, triethylene glycol di(meth)acrylate, (poly)propylene glycol di(meth)acrylate, dipropylene glycol di(meth)acrylate, tripropylene glycol di(meth)acrylate, 1,4-butanediol di(meth)acrylate, 4,6-hexanediol di(meth)acrylate, 1,9-nonanediol di(meth)acrylate, 1,10-decanediol di(meth)acrylate, pentaerythritol di(meth)acrylate, neopentyl glycol dimethacrylate, 3-methyl-1,5-pentanediol diacrylate, 2-hydroxy-3-acryloyloxypropyl methacrylate, dimethylol tricyclodecane diacrylate, and dicyclopentanyl diacrylate; trifunctional polymerizable compounds such as trimethylolpropane EO-adduct triacrylate, ethylene oxide-modified trimethylolpropane tri(meth)acrylate, propylene oxide-modified trimethylolpropane tri(meth)acrylate, pentaerythritol tri(meth)acrylate, dipentaerythritol tri(meth)acrylate, alkyl-modified dipentaerythritol tri(meth)acrylate, tris(2-acryloxyethyl) isocyanurate, ε-caprolactone-modified tris(2-acryloxyethyl) isocyanurate, ethoxylated glycerin triacrylate, and ditrimethylolpropane tetraacrylate; and polyfunctional polymerizable compounds having four or more polymerizable double bonds such as trimethylolpropane tetra(meth)acrylate, pentaerythritol tetra(meth)acrylate, dipentaerythritol tetra(meth)acrylate, alkyl-modified dipentaerythritol tetra(meth)acrylate, dipentaerythritol penta(meth)acrylate, alkyl-modified dipentaerythritol penta(meth)acrylate, dipentaerythritol hexa(meth)acrylate, caprolactone-modified dipentaerythritol hexa(meth)acrylate, and polypentaerythritol polyacrylate. From the viewpoint of easily forming a film (hard coating) in which cloudiness is further suppressed, the curable component (photocurable resin composition or thermosetting resin composition) may contain at least one of a bifunctional polymerizable compound and a trifunctional polymerizable compound. When the curable component (photocurable resin composition or thermosetting resin composition) contains a bifunctional polymerizable compound, the curable component may include at least one of hexamethylene diacrylate and 1,9-nonanediol diacrylate from the viewpoint of easily forming a film (hard coating) in which cloudiness is further suppressed. When the curable component (photocurable resin composition or thermosetting resin composition) contains a trifunctional polymerizable compound, the curable component may include at least one selected from the group consisting of trimethylolpropane EO-adduct triacrylate and ethoxylated glycerin triacrylate from the viewpoint of easily forming a film (hard coating) in which cloudiness is further suppressed.

From the viewpoint of improving hardness, the curable component (photocurable resin composition or thermosetting resin composition) may contain a bifunctional polymerizable compound as a polymerizable compound, and the content of the bifunctional polymerizable compound may be 5 to 95 mass%, 15 to 85 mass%, 30 to 70 mass%, or 40 to 55 mass% based on the total amount of the polymerizable compound.

From the viewpoint of improving hardness, the curable component (photocurable resin composition or thermosetting resin composition) may contain a trifunctional polymerizable compound as a polymerizable compound, and the content of the trifunctional polymerizable compound may be 5 to 95 mass%, 15 to 85 mass%, 30 to 70 mass%, or 45 to 60 mass% based on the total amount of the polymerizable compound.

From the viewpoint of improving hardness and flexibility in a well-balanced manner, the polymerizable compound may contain a plurality of polymerizable compounds having different numbers of functional groups, and for example, may contain a bifunctional polymerizable compound and a trifunctional or higher polymerizable compound (a polymerizable compound having 3 or more functional groups), may contain a bifunctional polymerizable compound and a trifunctional polymerizable compound, may contain a bifunctional polymerizable compound and a tetrafunctional polymerizable compound, or may contain a trifunctional polymerizable compound and a tetrafunctional polymerizable compound. From the viewpoint of improving hardness and flexibility in a well-balanced manner, the total content of these may be 5 mass% or more, 15 mass% or more, 30 mass% or more, 50 mass% or more, 70 mass% or more, or 90 mass% or more based on the total amount of the polymerizable compound.

The ratio of the content on a mass basis of the trifunctional or higher polymerizable compound to the content on a mass basis of the bifunctional polymerizable compound (content on a mass basis of trifunctional or higher polymerizable compound / content on a mass basis of bifunctional polymerizable compound) may be 0.5 or more, 1 or more, 1.2 or more, or 1.4 or more from the viewpoint of improving hardness and flexibility in a well-balanced manner, and may be 5 or less, 4 or less, 3 or less, 2 or less, or 1.5 or less from the same viewpoint. The ratio of the content on a mass basis of the trifunctional polymerizable compound to the content on a mass basis of the bifunctional polymerizable compound (content on a mass basis of trifunctional polymerizable compound / content on a mass basis of bifunctional polymerizable compound) may be 0.5 or more, 1 or more, 1.2 or more, or 1.4 or more from the viewpoint of improving hardness and flexibility in a well-balanced manner, and may be 5 or less, 4 or less, 3 or less, 2 or less, or 1.5 or less from the same viewpoint. The ratio of the content on a mass basis of the tetrafunctional polymerizable compound to the content on a mass basis of the bifunctional polymerizable compound (content on a mass basis of tetrafunctional polymerizable compound / content on a mass basis of bifunctional polymerizable compound) may be 0.5 or more, 1 or more, 1.2 or more, or 1.4 or more from the viewpoint of improving hardness and flexibility in a well-balanced manner, and may be 5 or less, 4 or less, 3 or less, 2 or less, or 1.5 or less from the same viewpoint. The ratio of the content on a mass basis of the tetrafunctional polymerizable compound to the content on a mass basis of the trifunctional polymerizable compound (content on a mass basis of tetrafunctional polymerizable compound / content on a mass basis of trifunctional polymerizable compound) may be 0.5 or more, 1 or more, 1.2 or more, or 1.4 or more from the viewpoint of improving hardness and flexibility in a well-balanced manner, and may be 5 or less, 4 or less, 3 or less, 2 or less, or 1.5 or less from the same viewpoint.

From the viewpoint of improving hardness and flexibility in a well-balanced manner, the curable component (photocurable resin composition or thermosetting resin composition) may contain a monofunctional polymerizable compound as a polymerizable compound. Examples of the monofunctional polymerizable compound include methyl (meth)acrylate, ethyl (meth)acrylate, propyl (meth)acrylate, butyl (meth)acrylate, 2-ethylhexyl (meth)acrylate, octyl (meth)acrylate, methoxypolyethylene glycol acrylate, phenoxydiethylene glycol acrylate, ethoxylated-o-phenylphenol acrylate, and 2-acryloyloxyethyl succinic acid.

### (Photopolymerization initiator)

From the viewpoint of improving hardness, the curable component (photocurable resin composition or thermosetting resin composition) may contain a photopolymerization initiator. As the photopolymerization initiator, one that decomposes and/or reacts by light (including active energy rays such as ultraviolet rays and electron beams) to generate radicals can be used. Examples of the photopolymerization initiator include 2,2-dimethoxy-1,2-diphenylethan-1-one, 1-hydroxy-cyclohexylphenyl-ketone, 2-hydroxy-2-methyl-1-phenyl-propan-1-one, 1-[4-(2-hydroxyethoxy)-phenyl]-2-hydroxy-2-methyl-1-propan-1-one, 2-hydroxy-1-{4-[4-(2-hydroxy-2-methyl-propionyl)-benzyl]phenyl}-2-methyl-propan-1-one, 2,4,6-trimethylbenzoyl-diphenyl-phosphine oxide, bis(2,4,6-trimethylbenzoyl)-phenylphosphine oxide, 2-methyl-1-(4-methylthiophenyl)-2-morpholinopropan-1-one, 2-hydroxy-4'-(2-hydroxyethoxy)-2-methylpropiophenone, 2-hydroxy-2-methylpropiophenone, 4,4'-bis(diethylamino)benzophenone, 2,4-dihydroxybenzophenone, ethyl-4-(dimethylamino)-benzoate, [4-(methylphenylthio)phenyl]-phenylmethane, ethylhexyl-4-dimethylaminobenzoate, benzophenone, methyl-o-benzoylbenzoate, 4-methylbenzophenone, 1-hydroxycyclohexyl phenyl ketone, methyl benzoylformate, 2,2-dimethoxy-2-phenylacetophenone, 1-[4-(2-hydroxyethoxy)-phenyl]-2-hydroxy-2-methylpropane, 2-benzyl-2-dimethylamino-1-(4-morpholinophenyl)-butanone-1, 2-methyl-[4-(methylthio)phenyl]-2-morpholino-1-propane, and 2-methyl-[4-(methylthio)phenyl]-2-morpholino-1-propane. These can be used in a combination of at least one or more types according to the optimal curing conditions.

The total content of the photopolymerization initiator may be 0.1 to 30 parts by mass, or 0.5 to 20 parts by mass, with respect to 100 parts by mass of the total amount of the polymerizable compound.

### (Thermal polymerization initiator)

From the viewpoint of improving heat resistance, the curable component (photocurable resin composition or thermosetting resin composition) may contain a thermal polymerization initiator. As the thermal polymerization initiator, one that decomposes and/or reacts by heat to generate radicals can be used. Examples of the thermal polymerization initiator include peroxydicarbonates such as di-2-ethylhexyl peroxydicarbonate; peroxyesters such as t-butyl peroxybenzoate, t-butyl peroxy-2-ethylhexanoate, t-butyl peroxyisopropyl carbonate, and t-hexyl peroxyisopropyl carbonate; peroxyketals such as di(t-butylperoxy)-2-methylcyclohexane, di(t-butylperoxy) 3,3,5-trimethylcyclohexane, and di(t-butylperoxy)cyclohexane; dialkyl peroxides such as NYPER BW (manufactured by NOF CORPORATION); and azo polymerization initiators such as VR-110 (NOF CORPORATION). These can be used in a combination of at least one or more types according to the optimal curing conditions.

The total content of the thermal polymerization initiator may be 0.1 to 30 parts by mass, or 0.5 to 20 parts by mass, with respect to 100 parts by mass of the total amount of the polymerizable compound.

### (Ultraviolet absorber)

From the viewpoint of improving weather resistance, the curable component (photocurable resin composition or thermosetting resin composition) may contain an ultraviolet absorber. As the ultraviolet absorber, known ones can be used, and benzotriazole-based compounds, benzophenone-based compounds, triazine-based compounds, and the like can be used. Examples of the ultraviolet absorber include triazine-based ultraviolet absorbers such as 2-[4-[(2-hydroxy-3-dodecyloxypropyl)oxy]-2-hydroxyphenyl]-4,6-bis(2,4-dimethylphenyl)-1,3,5-triazine, 2-[4-[(2-hydroxy-3-tridecyloxypropyl)oxy]-2-hydroxyphenyl]-4,6-bis(2,4-dimethylphenyl)-1,3,5-triazine, 2-[4-[(2-hydroxy-3-(2-ethylhexyloxy)propyl)oxy]-2-hydroxyphenyl]-4,6-bis(2,4-dimethylphenyl)-1,3,5-triazine, 2,4-bis(2-hydroxy-4-butyloxyphenyl)-6-(2,4-bisbutyloxyphenyl)-1,3,5-triazine, and 2-(2-hydroxy-4-[1-octyloxycarbonylethoxy]phenyl)-4,6-bis(4-phenylphenyl)-1,3,5-triazine; benzotriazole-based ultraviolet absorbers such as 2-[2-hydroxy-5-[2-(methacryloyloxy)ethyl]phenyl-2H-benzotriazole, 2-(2H-benzotriazol-2-yl)-4,6-bis(1-methyl-1-phenylethyl)phenol, 2-(2-hydroxy-5-tert-butylphenyl)-2H-benzotriazole, and 2-[2-hydroxy-5-(2-(meth)acryloyloxyethyl)phenyl]-2H-benzotriazole; benzophenone-based ultraviolet absorbers such as 2-hydroxy-4-methoxybenzophenone; cyanoacrylate-based ultraviolet absorbers such as ethyl-2-cyano-3,3-diphenylacrylate and octyl-2-cyano-3,3-diphenylacrylate; and inorganic particles that absorb ultraviolet rays, such as titanium oxide particles, zinc oxide particles, and tin oxide particles.

The content of the ultraviolet absorber may be 0.1 to 20 parts by mass, or 0.5 to 10 parts by mass, with respect to 100 parts by mass of the total amount of the polymerizable compound.

### (Silica particles)

From the viewpoint of improving scratch resistance, the curable component (photocurable resin composition or thermosetting resin composition) may contain silica particles. The shape of the silica particles is not particularly limited. Examples of the shape of the silica particles include spherical, rosary-like, pearl necklace-like, chain-like, cocoon-shaped, associated, and konpeito-shaped. The shape of the silica particles may be spherical. The silica particles may be colloidal silica or fumed silica.

The silica particles may be silica particles having a crosslinkable functional group on a part of the surface. Examples of the crosslinkable functional group include an amino group, a sulfo group, an epoxy group, an oxetanyl group, an acryloyl group, a methacryloyl group, a vinyl group, a methylol group, and a maleimide group.

Silica particles are available as a dispersion of silica particles. Examples of the dispersion medium include water, isopropyl alcohol, 1-methoxy-2-propyl alcohol, ethyl alcohol, methyl alcohol, ethylene glycol, ethylene glycol-n-propyl ether, propylene glycol monomethyl ether, propylene glycol monomethyl ether acetate, dimethylacetamide, N-methylpyrrolidone, toluene, methyl ethyl ketone, methyl isobutyl ketone, cyclohexane, and ethyl acetate. The dispersion medium may be a mixed liquid of the above dispersion media. The dispersion medium for the silica particles may be water from the viewpoint of versatility.

The pH of the dispersion of silica particles may be 2 to 10, 4 to 9, 6 to 8, or 2 to 5. The pH of the dispersion of silica particles can be measured with a pH meter (for example, manufactured by DKK-TOA CORPORATION, model number: PHL-40). For the measured value of pH, after 3-point calibration using standard buffer solutions (phthalate pH buffer solution pH: 4.01 (25°C), neutral phosphate pH buffer solution pH: 6.86 (25°C), borate pH buffer solution pH: 9.18 (25°C)), the value after the electrode is placed in the dispersion and stabilized for 2 minutes or more is adopted.

The zeta potential of the silica particles in the dispersion may be - 50 to 40 mV, -50 to -11 mV, or 11 to 40 mV. When the zeta potential of the silica particles is -50 to -11 mV, or 11 to 40 mV, the silica particles are likely to repel each other in the dispersion, and aggregation of the silica particles is likely to be suppressed.

The zeta potential of the silica particles can be measured with a zeta potential measuring instrument (for example, manufactured by Beckman Coulter, Inc., model number: Coulter Delsa 440). As a method for measuring the zeta potential, a test liquid is prepared by adding a dispersion medium to a dispersion of silica particles so that the concentration of the silica particles becomes 5 ppm based on the total amount of the test liquid, and dispersing the silica particles by ultrasonic treatment. Next, the test liquid is put into a measurement cell with platinum electrodes attached to both sides, and when a voltage of 10 V is applied to both electrodes, the charged silica particles move to the electrode side having the opposite polarity to their charge. The zeta potential can be calculated from the moving speed of the charged silica particles.

Commercially available products may be used as the colloidal silica dispersion, for example, ST-PS-SO (manufactured by Nissan Chemical Corporation), ST-PS-MO (manufactured by Nissan Chemical Corporation), ST-PS-M (manufactured by Nissan Chemical Corporation), ST-PS-S (manufactured by Nissan Chemical Corporation), ST-UP (manufactured by Nissan Chemical Corporation), ST-OUP (manufactured by Nissan Chemical Corporation), IPA-ST-UP (manufactured by Nissan Chemical Corporation), MA-ST-UP (manufactured by Nissan Chemical Corporation), PGM-ST-UP (manufactured by Nissan Chemical Corporation), MEK-ST-UP (manufactured by Nissan Chemical Corporation), IPA-ST (manufactured by Nissan Chemical Corporation), IPA-ST-L (manufactured by Nissan Chemical Corporation), IPA-ST-ZL (manufactured by Nissan Chemical Corporation), MA-ST-M (manufactured by Nissan Chemical Corporation), MA-ST-L (manufactured by Nissan Chemical Corporation), MA-ST-ZL (manufactured by Nissan Chemical Corporation), EG-ST (manufactured by Nissan Chemical Corporation), EG-ST-XL-30 (manufactured by Nissan Chemical Corporation), NPC-ST-30 (manufactured by Nissan Chemical Corporation), PGM-ST (manufactured by Nissan Chemical Corporation), DMAC-ST (manufactured by Nissan Chemical Corporation), DMAC-ST-ZL (manufactured by Nissan Chemical Corporation), NMP-ST (manufactured by Nissan Chemical Corporation), TOL-ST (manufactured by Nissan Chemical Corporation), MEK-ST-40 (manufactured by Nissan Chemical Corporation), MEK-ST-L (manufactured by Nissan Chemical Corporation), MEK-ST-ZL (manufactured by Nissan Chemical Corporation), MIBK-ST (manufactured by Nissan Chemical Corporation), MIBK-ST-L (manufactured by Nissan Chemical Corporation), CHO-ST-M (manufactured by Nissan Chemical Corporation), EAC-ST (manufactured by Nissan Chemical Corporation), PMA-ST (manufactured by Nissan Chemical Corporation), MEK-EC-2130Y (manufactured by Nissan Chemical Corporation), MEK-AC-2140Z (manufactured by Nissan Chemical Corporation), MEK-AC-4130Y (manufactured by Nissan Chemical Corporation), MEK-AC-5140Z (manufactured by Nissan Chemical Corporation), PGM-AC-2140Y (manufactured by Nissan Chemical Corporation), PGM-AC-4130Y (manufactured by Nissan Chemical Corporation), MIBK-AC-2140Z (manufactured by Nissan Chemical Corporation), MIBK-SD-L (manufactured by Nissan Chemical Corporation), ST-XS (manufactured by Nissan Chemical Corporation), ST-OXS (manufactured by Nissan Chemical Corporation), ST-NXS (manufactured by Nissan Chemical Corporation), ST-CXS (manufactured by Nissan Chemical Corporation), ST-S (manufactured by Nissan Chemical Corporation), ST-OS (manufactured by Nissan Chemical Corporation), ST-NS (manufactured by Nissan Chemical Corporation), ST-30 (manufactured by Nissan Chemical Corporation), ST-O (manufactured by Nissan Chemical Corporation), ST-N (manufactured by Nissan Chemical Corporation), ST-C (manufactured by Nissan Chemical Corporation), ST-AK (manufactured by Nissan Chemical Corporation), ST-50-T (manufactured by Nissan Chemical Corporation), ST-O-40 (manufactured by Nissan Chemical Corporation), ST-N-40 (manufactured by Nissan Chemical Corporation), ST-CM (manufactured by Nissan Chemical Corporation), ST-30L (manufactured by Nissan Chemical Corporation), ST-OL (manufactured by Nissan Chemical Corporation), ST-AK-L (manufactured by Nissan Chemical Corporation), ST-YL (manufactured by Nissan Chemical Corporation), ST-OYL (manufactured by Nissan Chemical Corporation), ST-AK-YL (manufactured by Nissan Chemical Corporation), ST-ZL (manufactured by Nissan Chemical Corporation), MP-1040 (manufactured by Nissan Chemical Corporation), MP-2040 (manufactured by Nissan Chemical Corporation), MP-4540M (manufactured by Nissan Chemical Corporation), PL-1-IPA (manufactured by Fuso Chemical Co., Ltd.), PL-1-TOL (manufactured by Fuso Chemical Co., Ltd.), PL-2L-PGME (manufactured by Fuso Chemical Co., Ltd.), PL-2L-MEK (manufactured by Fuso Chemical Co., Ltd.), PL-2L (manufactured by Fuso Chemical Co., Ltd.), PL-3 (manufactured by Fuso Chemical Co., Ltd.), PL-4 (manufactured by Fuso Chemical Co., Ltd.), PL-5 (manufactured by Fuso Chemical Co., Ltd.), PL-1H (manufactured by Fuso Chemical Co., Ltd.), PL-3H (manufactured by Fuso Chemical Co., Ltd.), PL-5H (manufactured by Fuso Chemical Co., Ltd.), BS-2L (manufactured by Fuso Chemical Co., Ltd.), BS-3L (manufactured by Fuso Chemical Co., Ltd.), BS-5L (manufactured by Fuso Chemical Co., Ltd.), HL-2L (manufactured by Fuso Chemical Co., Ltd.), HL-3L (manufactured by Fuso Chemical Co., Ltd.), HL-4L (manufactured by Fuso Chemical Co., Ltd.), PL-3-C (manufactured by Fuso Chemical Co., Ltd.), PL-3-D (manufactured by Fuso Chemical Co., Ltd.), TCSOL800 (manufactured by Tama Chemicals Co., Ltd.), SI-40 (manufactured by JGC C&C), SI-50 (manufactured by JGC C&C), SI-45P (manufactured by JGC C&C), SI-80P (manufactured by JGC C&C), SIK-23 (manufactured by JGC C&C), S-30H (manufactured by JGC C&C), SIK-15 (manufactured by JGC C&C), and SI-550 (manufactured by JGC C&C).

The average particle diameter (average secondary particle diameter) of the silica particles may be 1 to 1000 nm. The average particle diameter of the silica particles may be 3 nm or more, 5 nm or more, or 10 nm or more, and may be 700 nm or less, 500 nm or less, 300 nm or less, 200 nm or less, or 100 nm or less.

The average particle diameter of the silica particles can be measured, for example, by the following procedure. That is, about 100 µL (L represents liter; the same applies hereinafter) of a dispersion of silica particles is weighed, and diluted with a dispersion medium so that the content of silica particles is around 0.05 mass% (a content at which the transmittance (H) during measurement is 60 to 70%) to obtain a diluted liquid. Next, the diluted liquid is put into the sample tank of a laser diffraction particle size distribution analyzer (manufactured by HORIBA, Ltd., trade name: LA-920, refractive index: 1.93, light source: He-Ne laser, absorption 0), and the average particle diameter of the silica particles can be measured.

The silica particles may be used alone or in combination of two or more types of different shapes according to the filling rate and the structural thickness of the molded product. From the viewpoint of improving hardness and flexibility in a well-balanced manner, the total content of the silica particles may be 10 to 100 parts by mass, or 25 to 60 parts by mass, with respect to 100 parts by mass of the total amount of the polymerizable compound.

### (Silane coupling agent)

From the viewpoint of improving the crosslinking density, the curable component (photocurable resin composition or thermosetting resin composition) may further contain a silane coupling agent. Examples of the silane coupling agent include a silane coupling agent having an acryloyl group, a silane coupling agent having a methacryloyl group, a silane coupling agent having an alkyl group, a silane coupling agent having an alkenyl group, a silane coupling agent having an aryl group, a silane coupling agent having an epoxy group, and a silane coupling agent having an amino group.

Examples of the silane coupling agent having an acryloyl group include 3-acryloxypropyltrimethoxysilane (KBM-5103, etc., manufactured by Shin-Etsu Chemical Co., Ltd.), X-12-1048 (manufactured by Shin-Etsu Chemical Co., Ltd.), X-12-1050 (manufactured by Shin-Etsu Chemical Co., Ltd.), and KR-513 (manufactured by Shin-Etsu Chemical Co., Ltd.). Examples of the silane coupling agent having a methacryloyl group include 3-methacryloxypropyltrimethoxysilane (KBM-503, etc., manufactured by Shin-Etsu Chemical Co., Ltd.), 8-methacryloxyoctyltrimethoxysilane (KBM-5803, etc., manufactured by Shin-Etsu Chemical Co., Ltd.), 3-methacryloxypropyltriethoxysilane (KBE-503, etc., manufactured by Shin-Etsu Chemical Co., Ltd.), 3-methacryloxypropylmethyldimethoxysilane (KBM-502, etc., manufactured by Shin-Etsu Chemical Co., Ltd.), 3-methacryloxypropylmethyldiethoxysilane (KBE-502, etc., manufactured by Shin-Etsu Chemical Co., Ltd.), Z-6030 (manufactured by Dow Corning Toray Co., Ltd.), Y9936 (manufactured by Momentive Performance Materials Inc.), and A-174 (manufactured by Momentive Performance Materials Inc.).

From the viewpoint of improving the crosslinking density, the content of the silane coupling agent may be 0.001 to 5.0 parts by mass, or 0.01 to 1.0 part by mass, with respect to 100 parts by mass of the total amount of the polymerizable compound.

### (Polysiloxane compound having amino group)

The functional coating material contains a polysiloxane compound having an amino group (hereinafter also simply referred to as "polysiloxane compound"). The polysiloxane compound has a siloxane chain and an amino group. The polysiloxane compound may have an amino group at a terminal of the siloxane chain, or may have an amino group in a side chain of the siloxane chain. From the viewpoint of compatibility with the curable component, the polysiloxane compound may have an amino group in a side chain or at a terminal of the siloxane compound. The functional coating material may include a reaction product of the curable component and the polysiloxane compound having an amino group.

The polysiloxane compound can also be described as a compound in which a part of the structural units constituting the siloxane chain is substituted with a structural unit having an amino group.

The siloxane chain that the polysiloxane compound has may be constituted from, for example, a structural unit represented by the following formula (1-1).

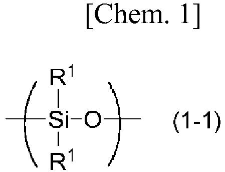

In the formula, R1 represents an alkyl group or a phenyl group. The plurality of R¹s may be the same or different.

R1 may be an alkyl group having 1 to 6 carbon atoms or a phenyl group, may be a methyl group or an ethyl group, and may be a methyl group.

The terminal of the structural unit that the polysiloxane compound has may be, for example, a structural unit represented by the following formula (1-X), (1-Y), or (1-Z).

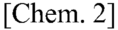

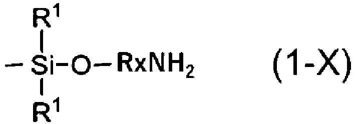

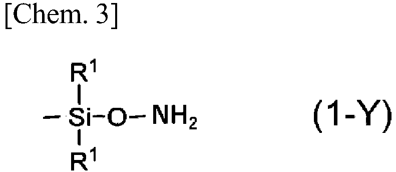

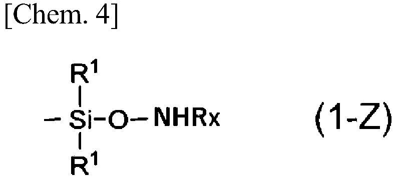

In formulas (1-X) and (1-Z), Rx may be an alkyl group having 1 to 10 carbon atoms or a phenyl group, may be a methyl group or an ethyl group, and may be a methyl group. In formulas (1-X), (1-Y), and (1-Z), R1 may be an alkyl group or a phenyl group, may be an alkyl group having 1 to 6 carbon atoms or a phenyl group, may be a methyl group or an ethyl group, and may be a methyl group. The plurality of R¹s may be the same or different.

The siloxane chain that the polysiloxane compound has may have a structural unit represented by the following formula (2-1) as a structural unit having an amino group.

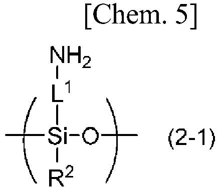

In the formula, R2 represents an alkyl group, and L1 represents a divalent group.

R2 may be an alkyl group having 1 to 6 carbon atoms, may be a methyl group or an ethyl group, and may be a methyl group.

Examples of L1 include an alkanediyl group, and a group in which at least one -CH₂- in the alkanediyl group is substituted with -NH- or -O-. The number of carbon atoms of the alkanediyl group may be, for example, 2 to 12, and may be 4 to 8.

Examples of L1 include a group represented by -R²¹-NH-R²²-. R²¹ and R²² each independently represent an alkanediyl group. In this group, R²¹ is a group bonded to Si, and R²² is a group bonded to NH₂.

The number of carbon atoms of the alkanediyl groups of R²¹ and R²² may be, for example, 1 to 8, and may be 1 to 4.

From the viewpoint of improving water repellency and stain resistance, the polysiloxane compound may have a 2-[(2-aminoethyl)amino]propyl group in a side chain.

The average number of amino groups that one molecule of the polysiloxane compound has may be, for example, 1 to 10, and from the viewpoint of water repellency, may be 1 to 7, and may be 1 to 4.

In the siloxane chain of the polysiloxane compound, the average value of the molar ratio (C₂/C₁) of the content C₂ of the structural unit represented by formula (2-1) to the content C₁ of the structural unit represented by formula (1-1) may be, for example, 0.01 to 100, may be 0.01 to 10, and may be 0.01 to 1.

The average number of silicon atoms that one molecule of the polysiloxane compound has may be, for example, 10 or more, 50 or more, 100 or more, 200 or more, or 300 or more. When the number of silicon atoms in the polysiloxane compound is large, that is, when the degree of polymerization of the polysiloxane compound is large, the water repellency of the formed film (hard coating) tends to be further improved.

In addition, from the viewpoint of compatibility with the curable component, the average number of silicon atoms that one molecule of the polysiloxane compound has may be, for example, 500 or less, 400 or less, or 360 or less.

From the viewpoints of water repellency and viscosity, the polysiloxane compound may have an alkyl group having 12 to 50 carbon atoms (hereinafter, long-chain alkyl group). The number of carbon atoms of the long-chain alkyl group may be 12 to 30, and may be 15 to 17. The long-chain alkyl group may be linear or branched, but is more preferably linear.

The polysiloxane compound may have a long-chain alkyl group at a terminal of the siloxane chain, or may have a long-chain alkyl group in a side chain of the siloxane chain. From the viewpoint of water repellency, the polysiloxane compound may have a long-chain alkyl group at a terminal of the siloxane chain.

The terminal of the siloxane chain of the polysiloxane compound may be, for example, a structural unit represented by the following formula (3-1) or a structural unit represented by the following formula (3-2). These structural units may be directly bonded to the oxygen atom terminal of the siloxane chain, and may be bonded to the silicon atom terminal via an oxygen atom.

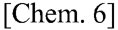

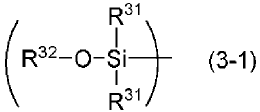

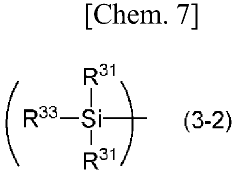

In the formulas, R³¹, R³², and R³³ each independently represent an alkyl group or an aralkyl group. The plurality of R³¹s may be the same or different.

R³¹ is preferably an alkyl group having 1 to 6 carbon atoms, more preferably a methyl group or an ethyl group, and still more preferably a methyl group.

R³² is preferably an alkyl group having 1 to 6 carbon atoms, more preferably a methyl group or an ethyl group, and still more preferably a methyl group.

R³³ may be an aralkyl group, may be a long-chain alkyl group having 12 to 50 carbon atoms, and may be a long-chain alkyl group having 15 to 17 carbon atoms (for example, a cetearyl group [CH₃(CH₂)₁₅₋₁₇-]). When R³³ is an aralkyl group, R³³ may be the following (iii).

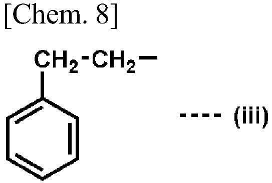

From the viewpoint of water repellency, the terminal of the siloxane chain of the polysiloxane compound may be a structural unit represented by formula (3-2).

The weight-average molecular weight of the polysiloxane compound may be, for example, 950 or more, 2500 or more, 8000 or more, or 20000 or more. When the weight-average molecular weight of the polysiloxane compound is large, the water repellency of the formed film (hard coating) tends to be further improved.

In addition, from the viewpoint of compatibility with the curable component, the weight-average molecular weight of the polysiloxane compound may be, for example, 40000 or less, preferably 35000 or less, and more preferably 25000 or less. This tends to further improve the dispersibility in the curable component.

The weight-average molecular weight is converted from a calibration curve using standard polystyrene by gel permeation chromatography (GPC). The calibration curve is approximated by a cubic equation using a set of 5 standard polystyrene samples (PStQuick MP-H, PStQuick B [Tosoh Corporation, trade name]). The GPC conditions are, for example, as follows. The injection volume is adjusted according to the peak height and peak resolution.
Apparatus: High-speed GPC apparatus "HLC-8320GPC" (Tosoh Corporation, trade name)
Detector: Ultraviolet absorption detector "UV-8320" (Tosoh Corporation, trade name)
Column: Guard column; TSKgel guardcolumn Super(HZ)-M+, Column; TSKgel SuperMultipore HZ-M (2 columns), Reference column; TSKgel SuperH-RC (2 columns) (all from Tosoh Corporation, trade name)
Column size: 4.6 x 20 mm (guard column), 4.6 x 150 mm (column), 6.0 x 150 mm (reference column)
Eluent: Tetrahydrofuran
Sample concentration: 10 mg/1 mL
Injection volume: 20 µL or 2 µL
Flow rate: 0.35 mL/min
Measurement temperature: 40°C

From the viewpoint of improving water repellency and stain resistance, the amine equivalent of the polysiloxane compound may be 500 to 5000 g/mol, may be 1000 to 3000 g/mol, and from the viewpoint of further improving the transparency, abrasion resistance, and stain resistance of the film (hard coating), may be 1000 to 1500 g/mol.

As for the blending ratio of the curable component and the polysiloxane compound having an amino group in the functional coating material of the present embodiment, from the viewpoints of abrasion resistance and water repellency, the amount of the polysiloxane compound having an amino group may be 0.01 to 10 parts by mass, may be 0.1 to 5 parts by mass, and may be 0.3 to 1.0 part by mass, with respect to 100 parts by mass of the curable component. When the functional coating material contains a polymerizable compound as the curable component, from the viewpoints of abrasion resistance and water repellency, the amount of the polysiloxane compound having an amino group may be 0.01 to 10 parts by mass, may be 0.1 to 5 parts by mass, and may be 0.1 to 1.0 part by mass, with respect to 100 parts by mass of the polymerizable compound.

### (Polymerization inhibitor)

The functional coating material contains a polymerization inhibitor. By containing a polymerization inhibitor, the functional coating material can form a film (hard coating) in which cloudiness is suppressed.

Examples of the polymerization inhibitor include catechol compounds such as catechol, resorcinol, 1,4-hydroquinone, 2-methylcatechol, 3-methylcatechol, 4-methylcatechol, 2-ethylcatechol, 3-ethylcatechol, 4-ethylcatechol, 2-propylcatechol, 3-propylcatechol, 4-propylcatechol, 2-n-butylcatechol, 3-n-butylcatechol, 4-n-butylcatechol, 2-tert-butylcatechol, 3-tert-butylcatechol, 4-tert-butylcatechol, and 3,5-di-tert-butylcatechol; resorcinol compounds such as 2-methylresorcinol, 4-methylresorcinol, 5-methylresorcinol (orcinol), 2-ethylresorcinol, 4-ethylresorcinol, 2-propylresorcinol, 4-propylresorcinol, 2-n-butylresorcinol, 4-n-butylresorcinol, 2-tert-butylresorcinol, and 4-tert-butylresorcinol; hydroquinone compounds such as methylhydroquinone, ethylhydroquinone, propylhydroquinone, tert-butylhydroquinone, and 2,5-di-tert-butylhydroquinone; and aminoxyl compounds such as 2,2,6,6-tetramethylpiperidine-1-oxyl and 4-hydroxy-2,2,6,6-tetramethylpiperidine-1-oxyl. From the viewpoint of easily forming a film (hard coating) in which cloudiness is further suppressed, the polymerization inhibitor may be a catechol compound or an aminoxyl compound; from the viewpoint of more easily forming a film (hard coating) in which cloudiness is suppressed, it may be a catechol compound; and from the viewpoint of easily forming a film (hard coating) in which yellowing is suppressed, it may be an aminoxyl compound.

From the viewpoint of easily forming a film (hard coating) in which cloudiness is further suppressed, the molecular weight of the polymerization inhibitor may be 100 or more, 120 or more, 140 or more, 150 or more, or 160 or more, and may be 300 or less, 250 or less, 200 or less, or 180 or less.

From the viewpoint of easily forming a film (hard coating) in which cloudiness is further suppressed, the content of the polymerization inhibitor may be 0.001 parts by mass or more, 0.005 parts by mass or more, 0.01 parts by mass or more, 0.02 parts by mass or more, 0.03 parts by mass or more, or 0.04 parts by mass or more, with respect to 100 parts by mass of the curable component. From the viewpoint of accelerating the curing rate of the functional coating material, the content of the polymerization inhibitor may be 10 parts by mass or less, 1 part by mass or less, 0.5 parts by mass or less, 0.1 parts by mass or less, 0.08 parts by mass or less, 0.06 parts by mass or less, or 0.05 parts by mass or less, with respect to 100 parts by mass of the curable component. The functional coating material may contain a single polymerization inhibitor or a plurality of polymerization inhibitors.

From the viewpoint of easily forming a film (hard coating) in which cloudiness is further suppressed, the content of the polymerization inhibitor may be 0.1 parts by mass or more, 0.5 parts by mass or more, 0.1 parts by mass or more, 0.5 parts by mass or more, 1 part by mass or more, 5 parts by mass or more, or 10 parts by mass or more, with respect to 100 parts by mass of the polysiloxane compound having an amino group. From the viewpoint of accelerating the curing rate of the functional coating material, the content of the polymerization inhibitor may be 100 parts by mass or less, 50 parts by mass or less, 30 parts by mass or less, 20 parts by mass or less, 15 parts by mass or less, or 10 parts by mass or less, with respect to 100 parts by mass of the polysiloxane compound having an amino group.

From the viewpoint of easily forming a film (hard coating) in which cloudiness is further suppressed, the content of the polymerization inhibitor may be 0.001 parts by mass or more, 0.005 parts by mass or more, 0.01 parts by mass or more, 0.02 parts by mass or more, 0.03 parts by mass or more, or 0.04 parts by mass or more, with respect to a total of 100 parts by mass of the curable component and the polysiloxane compound having an amino group. From the viewpoint of accelerating the curing rate of the functional coating material, the content of the polymerization inhibitor may be 10 parts by mass or less, 1 part by mass or less, 0.5 parts by mass or less, 0.1 parts by mass or less, 0.08 parts by mass or less, 0.06 parts by mass or less, or 0.05 parts by mass or less, with respect to a total of 100 parts by mass of the curable component and the polysiloxane compound having an amino group.

The functional coating material of the present embodiment may include a liquid medium.

As the liquid medium, for example, water, an organic solvent, or a mixed solvent thereof can be used. Examples of the organic solvent include alcohols such as methyl alcohol, ethyl alcohol, 1-propanol, isopropyl alcohol, 1-butyl alcohol, 2-butyl alcohol, isobutyl alcohol, diacetone alcohol, 1-butoxy-2-propanol, 1-hexanol, 1-octanol, 2-octanol, and 3-methoxy-3-methyl-1-butanol; glycols such as polyethylene glycol; glycol ethers such as ethylene glycol monomethyl ether, ethylene glycol monoethyl ether, ethylene glycol monopropyl ether, ethylene glycol monobutyl ether, ethylene glycol mono-tert-butyl ether, propylene glycol monomethyl ether acetate, propylene glycol n-propyl ether, and propylene glycol monomethyl ether; ketones such as acetone and methyl ethyl ketone; ethers such as tetrahydrofuran and dioxane; esters such as ethyl acetate and butyl acetate; cyclic hydrocarbons such as cyclohexane; and acetonitrile. These may be used alone or in a mixture of two or more.

The content of the liquid medium may be 100 to 1000 parts by mass, and may be 250 to 750 parts by mass, with respect to a total of 100 parts by mass of the curable component and the polysiloxane compound having an amino group.

The functional coating material of the present embodiment may have a solid content concentration of 50 to 100 mass%, may have 75 to 100 mass%, and may have 90 to 100 mass%.

The functional coating material of the present embodiment may contain various additives such as a sensitizer, a silane coupling agent, an antioxidant, a light stabilizer, a thickener, an anti-condensation agent, and an anti-snow-accretion agent, as necessary, within a range where the desired effects can be obtained.

### (Sensitizer)

Examples of the sensitizer include anthracene compounds and benzophenone compounds. Examples of the anthracene compounds include anthracene, 9,10-dibutoxyanthracene, 9,10-diethoxyanthracene, 3,7-dimethoxyanthracene, and 9,10-dipropyloxyanthracene. Examples of the benzophenone compounds include benzophenone, methylbenzophenone, 4,4'-dichlorobenzophenone, 4,4'-bis(diethylamino)benzophenone, Michler's ketone, and 4-benzoyl-4'-methyldiphenyl sulfide.

The addition concentration of the sensitizer may be 0.1 parts by mass to 5.0 parts by mass, may be 0.5 to 4.0 parts by mass, and may be 1.0 to 3.0 parts by mass, with respect to 100 parts by mass of the curable component.

The functional coating material may be for forming a hard coating. That is, the functional coating material may be a hard coating material. The hard coating material may be a functional hard coating material. The functional hard coating material means a hard coating material capable of forming a hard coating having functions such as stain resistance, transparency, water repellency, fingerprint resistance, and antifogging property. The hard coating material may be one that can form a hard coating having both water repellency and/or stain resistance. That is, the hard coating material may be a water-repellent hard coating material, a stain-resistant hard coating material, or a water-repellent and stain-resistant hard coating material.

### <Hard coat>

The hard coating of the present embodiment consists of a cured product of the functional coating material of the present embodiment described above.

The hard coating can be formed by applying the functional coating material of the present embodiment onto a desired substrate and curing it.

The substrate may be a glass substrate, a plastic substrate such as a polycarbonate substrate or an acrylic substrate, a metal substrate such as aluminum or stainless steel (SUS), or the like. Examples include automobile components such as body exteriors, glass exteriors, headlamps, sensor lenses, and window glass; image display devices such as liquid crystal display devices, CRT display devices, plasma display devices, EL (electroluminescence) display devices, and touch panels; buildings such as exterior walls, roofs, and window glass; indoors of buildings such as kitchens, bathtubs, toilets, and washrooms; solar panels of solar cells; electric wires of power grids; and textiles such as clothing and tents.

Examples of the application method include a spin coating method, a dip coating method, a spray coating method, a flow coating method, a bar coating method, gravure coating, a bar coating method, and a wiping method. These methods may be used alone or in combination of two or more.

As a method for curing the coating film, it can be appropriately selected according to the curable component, and examples include means such as heating, irradiation with active energy rays, and natural drying. These may be combined in plurality. When the functional coating material includes a polymerizable compound and a photopolymerization initiator as the curable component, it can be cured, for example, by irradiating with active energy rays (such as ultraviolet rays). In this case, after irradiating with active energy rays, it may be further heated.

The irradiation with ultraviolet rays may be performed using a halogen lamp or a high-pressure mercury lamp. From the viewpoint of increasing the curing rate of the functional coating material, the exposure dose of ultraviolet rays may be, for example, 1000 mJ/cm² or more, 3000 mJ/cm² or more, or 5000 mJ/cm² or more, and from the viewpoint of easily forming a film (hard coating) in which cloudiness is further suppressed, it may be, for example, 5000 mJ/cm² or less, 3000 mJ/cm² or less, or 1000 mJ/cm² or less.

The hard coating may have both water repellency and stain resistance. That is, the hard coating may be a water-repellent and stain-resistant hard coating.

The haze of the hard coating may be 2 or less, 1.8 or less, 1.6 or less, 1.4 or less, 1.2 or less, 1 or less, or 0.8 or less. The smaller the haze of the hard coating, the more the cloudiness of the hard coating is suppressed. The haze of the hard coating may be 0.1 or more. The haze of the hard coating can be measured by the method described in the Examples below.

The transmittance of the hard coating may be 80% or more, 82% or more, 84% or more, 86% or more, or 88% or more. The higher the transmittance of the hard coating, the more the cloudiness of the hard coating is suppressed. The transmittance of the hard coating can be measured by the method described in the Examples below.

The YI of the hard coating may be 2 or less, 1.8 or less, 1.6 or less, or 1.4 or less. The smaller the YI of the hard coating, the more the yellowing of the hard coating is suppressed, and the better the appearance. The YI of the hard coating can be measured by the method described in the Examples below.

The difference in haze of the hard coating before and after the abrasion resistance test may be 2.0 or less, 1.5 or less, or 1.0 or less. The measurement of the difference in haze can be measured by the method described in the Examples below.

The pencil hardness of the hard coating is, for example, 3B or higher. The pencil hardness of the hard coating may be 2B or higher, B or higher, or HB or higher. The pencil hardness can be measured in accordance with JIS-K5600-5-4.

From the viewpoints of abrasion resistance, water repellency, and stain resistance, the thickness of the hard coating may be 0.1 µm or more, 1 µm or more, or 10 µm or more, and from the viewpoint of transparency, may be 1000 µm or less, 500 µm or less, or 100 µm or less.

### <Structure>

The structure of the present embodiment includes a substrate and the hard coating of the present embodiment described above provided on the substrate. When the hard coating has both water repellency and stain resistance, the structure can be said to be a water-repellent and stain-resistant structure.

Examples of the substrate include those described above.

### Examples

Hereinafter, the present invention will be described more specifically with reference to Examples. However, the present invention is not limited to these Examples.

### <Preparation of Curable Component A1>

230 g of IPA-dispersed spherical nanosilica (manufactured by Nissan Chemical Corporation, trade name: IPA-ST, average particle diameter 12 nm, solid content of spherical nanosilica 70 g), 70 g of trimethylolpropane EO-adduct triacrylate (manufactured by Shin-Nakamura Chemical Co., Ltd., trade name: AT-20E), 50 g of hexamethylene diacrylate, 14 g of 2-hydroxy-2-methylpropiophenone (photopolymerization initiator, manufactured by FUJIFILM Wako Pure Chemical Corporation), 4 g of 2,4-dihydroxybenzophenone (photopolymerization initiator, manufactured by FUJIFILM Wako Pure Chemical Corporation), 4 g of 2-[2-hydroxy-5-[2-(methacryloyloxy)ethyl]phenyl]-2H-benzotriazole (ultraviolet absorber, manufactured by FUJIFILM Wako Pure Chemical Corporation), and 0.1 g of X-12-1050 (acrylic silane coupling agent, manufactured by Shin-Etsu Chemical Co., Ltd.) were mixed. Next, the resulting mixture was distilled at 80°C for 2 hours with stirring to remove IPA, thereby obtaining curable component A1.

### <Preparation of Curable Component A2>

200 g of IPA-dispersed spherical nanosilica (manufactured by Nissan Chemical Corporation, trade name: IPA-ST, average particle diameter 12 nm, solid content of spherical nanosilica 60 g), 60 g of ethoxylated glycerin triacrylate (manufactured by Shin-Nakamura Chemical Co., Ltd., trade name: A-GLY-9E), 50 g of 1,9-nonanediol diacrylate (manufactured by Shin-Nakamura Chemical Co., Ltd., trade name: A-NOD-N), 17 g of 2-hydroxy-4-(2-hydroxyethoxy)-2-methylpropiophenone (photopolymerization initiator, manufactured by FUJIFILM Wako Pure Chemical Corporation), 4 g of 2,4-dihydroxybenzophenone (photopolymerization initiator, manufactured by FUJIFILM Wako Pure Chemical Corporation), 8 g of 2-(2-hydroxy-5-tert-butylphenyl)-2H-benzotriazole (ultraviolet absorber, manufactured by FUJIFILM Wako Pure Chemical Corporation), and 0.1 g of X-12-1050 (acrylic silane coupling agent, manufactured by Shin-Etsu Chemical Co., Ltd.) were mixed. Next, the resulting mixture was distilled at 80°C for 2 hours with stirring to remove IPA, thereby obtaining curable component A2.

### <Preparation of Curable Component A3>

200 g of MEK-dispersed spherical nanosilica (manufactured by Nissan Chemical Corporation, trade name: MEK-AC-2140Z, average particle diameter 12 nm, solid content of spherical nanosilica 80 g), 60 g of ethoxylated glycerin triacrylate (manufactured by Shin-Nakamura Chemical Co., Ltd., trade name: A-GLY-9E), 50 g of 1,9-nonanediol diacrylate (manufactured by Shin-Nakamura Chemical Co., Ltd., trade name: A-NOD-N), 17 g of 2-hydroxy-4-(2-hydroxyethoxy)-2-methylpropiophenone (photopolymerization initiator, manufactured by FUJIFILM Wako Pure Chemical Corporation), 4 g of 2,4-dihydroxybenzophenone (photopolymerization initiator, manufactured by FUJIFILM Wako Pure Chemical Corporation), and 8 g of 2-(2-hydroxy-5-tert-butylphenyl)-2H-benzotriazole (ultraviolet absorber, manufactured by FUJIFILM Wako Pure Chemical Corporation) were mixed. Next, the resulting mixture was distilled at 60°C for 1 hour with stirring to remove MEK, thereby obtaining curable component A3.

### <Preparation of Curable Component A4>

200 g of MEK-dispersed spherical nanosilica (manufactured by Nissan Chemical Corporation, trade name: MEK-AC-2140Z, average particle diameter 12 nm, solid content of spherical nanosilica 80 g), 60 g of ethoxylated glycerin triacrylate (manufactured by Shin-Nakamura Chemical Co., Ltd., trade name: A-GLY-9E), 50 g of 1,9-nonanediol diacrylate (manufactured by Shin-Nakamura Chemical Co., Ltd., trade name: A-NOD-N), 7 g of t-butyl peroxy-2-ethylhexanoate (manufactured by NOF CORPORATION, trade name: PEROCTA O), and 8 g of 2-(2-hydroxy-5-tert-butylphenyl)-2H-benzotriazole (ultraviolet absorber, manufactured by FUJIFILM Wako Pure Chemical Corporation) were mixed. Next, the resulting mixture was distilled at 60°C for 1 hour with stirring to remove MEK, thereby obtaining curable component A4.

### <Preparation of Curable Component A5>

100 g of PGM-dispersed spherical nanosilica (manufactured by Nissan Chemical Corporation, trade name: PGM-AC-4130Y, average particle diameter 45 nm, solid content of spherical nanosilica 30 g), 120 g of trimethylolpropane EO-adduct triacrylate (manufactured by Shin-Nakamura Chemical Co., Ltd., trade name: A-TMPT-9EO), 100 g of 1,9-nonanediol diacrylate (manufactured by Shin-Nakamura Chemical Co., Ltd., trade name: A-NOD-N), 17 g of 2-hydroxy-4-(2-hydroxyethoxy)-2-methylpropiophenone (photopolymerization initiator, manufactured by FUJIFILM Wako Pure Chemical Corporation), 4 g of 2,4-dihydroxybenzophenone (photopolymerization initiator, manufactured by FUJIFILM Wako Pure Chemical Corporation), and 8 g of 2-(2-hydroxy-5-tert-butylphenyl)-2H-benzotriazole (ultraviolet absorber, manufactured by FUJIFILM Wako Pure Chemical Corporation) were mixed. Next, the resulting mixture was distilled at 60°C for 1 hour with stirring to remove PGM, thereby obtaining curable component A5.

### <Preparation of Polysiloxane Compound B>

100 parts by mass of styrene (manufactured by Tokyo Chemical Industry Co., Ltd.) and 0.2 parts by mass of a 1% chloroplatinic acid isopropanol solution were heated to 70°C with stirring. Next, 74 parts by mass of a polyorganosiloxane represented by the following formula (i) (manufactured by Momentive Performance Materials Japan LLC, product name "XF40-C2195") was added dropwise. After the dropwise addition was completed, the temperature was raised to 80°C, and the mixture was stirred for 1 hour to obtain an alkyl-modified polyorganosiloxane of the following formula (ii). In formula (ii), R^{B} represents an aralkyl group shown in (iii).

H(CH₃)₂-SiO-((CH₃)₂SiO)₁₈-Si(CH₃)₂H ... (i)

R^{B}(CH₃)₂-SiO-((CH₃)₂SiO)₁₈-Si(CH₃)₂R^{B} ... (ii)

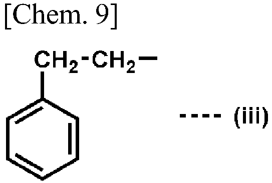

Next, 186 parts of the obtained alkyl-modified polyorganosiloxane, 651 parts of octamethylcyclotetrasiloxane (manufactured by Tokyo Chemical Industry Co., Ltd.), and 25 parts of N-(2-aminoethyl)-3-aminopropylmethyldimethoxysilane (manufactured by Tokyo Chemical Industry Co., Ltd.) were mixed and heated to 90°C with stirring. Next, a 10% aqueous solution of tetramethylammonium hydroxide (manufactured by Nacalai Tesque, Inc.) was added at 90 ppm as an active ingredient, and the mixture was stirred at 90°C for 3 hours. Next, low molecular weight siloxanes were distilled off under reduced pressure to obtain an aralkyl-terminated, side-chain amino-modified organopolysiloxane (polysiloxane compound B). The average amine equivalent of polysiloxane compound B was 1400, the weight-average molecular weight was 23000, the average number of silicon atoms in one molecule was 305, and the average value of the molar ratio (C₂/C₁) of the content C₂ of the structural unit represented by formula (2-1) to the content C₁ of the structural unit represented by formula (1-1) in the siloxane chain was 0.06.

### <Polymerization inhibitor>

The following compounds were used as polymerization inhibitors.
- t-butylcatechol (manufactured by DIC Corporation, trade name: DIC-TBC-5P)
- 2,2,6,6-tetramethyl-4-hydroxypiperidine-1-oxyl (manufactured by ADEKA CORPORATION, LA-7RD)
- 4-methylcatechol (Tokyo Chemical Industry Co., Ltd.)
- 2,2,6,6-tetramethylpiperidine-1-oxyl (Kanto Chemical Co., Inc.)

The following compound was used as a silane coupling agent.

### <Silane coupling agent>

- 3-glycidoxypropyltriethoxysilane (Shin-Etsu Chemical Co., Ltd., KBE-403)

### <Preparation of functional coating material>

### (Examples 1 to 6 and Comparative Example 1)

Each component was mixed at 40°C in the composition (parts by mass) shown in Table 1 to obtain functional coating materials.

### <Evaluation of hard coat (Curable components A1 to A3, A5)>

A functional coating material was applied onto a polycarbonate substrate using a bar coater (No. 8, manufactured by Daiichi Rika Co., Ltd.) to form a coating film. Next, the coating film was exposed to ultraviolet light (exposure dose: as described in Table 1, in the air) using a high-pressure mercury lamp (manufactured by Ushio Inc., trade name: UVC-8kW2-500HCC-1). Subsequently, a substrate with a hard coating was obtained in which a hard coating (thickness 20 to 30 µm) was formed on the polycarbonate substrate. The following evaluations were performed on the obtained substrate with a hard coating. The results are shown in Table 1.

### <Evaluation of hard coat (Curable component A4)>

A functional coating material was applied onto a polycarbonate substrate using a bar coater (No. 11, manufactured by Daiichi Rika Co., Ltd.) to form a coating film. Next, the coating film was cured by heat using an explosion-proof dryer. Subsequently, a substrate with a hard coating was obtained in which a hard coating (thickness 20 to 30 µm) was formed on the polycarbonate substrate. The following evaluations were performed on the obtained substrate with a hard coating. The results are shown in Table 1.

### (Appearance)

The appearance of the center of the substrate with a hard coating was visually observed to check for the presence or absence of cloudiness.

### (Haze)

The haze at the center of the substrate with a hard coating was measured using a spectral haze meter SH7000 (manufactured by Nippon Denshoku Industries Co., Ltd.).

### (Transmittance)

The transmittance at the center of the substrate with a hard coating was measured using a spectral haze meter SH7000 (manufactured by Nippon Denshoku Industries Co., Ltd.).

### (YI)

The YI of the substrate with a hard coating was measured using a spectral haze meter SH7000 (manufactured by Nippon Denshoku Industries Co., Ltd.).

### (Scratch resistance)

An abrasion resistance test was performed on the substrate with a hard coating. The substrate with a hard coating was placed on the stage of a surface measuring instrument TYPE: 14FW (manufactured by Shinto Scientific Co., Ltd.), steel wool (#0000) was set on a circular probe with a diameter of 2 cm, a 500 g weight was placed on it, and the hard coating was scratched under the conditions of a wear distance of 50 mm one way, a wear speed of 6000 mm/min, and 10 round trips. The haze before and after scratching was measured using a spectral haze meter SH7000, and the difference in haze was calculated.

**[Table 1]**

| | | | Example 1 | Example 2 | Example 3 | Example 4 | Example 5 | Example 6 | Comparative Example 1 |
|---|---|---|---|---|---|---|---|---|---|
| Functional coating material | Curable component | A1 | 100 | - | - | - | - | - | 100 |
| | | A2 | - | 100 | - | - | - | - | - |
| | | A3 | - | - | 100 | - | - | - | - |
| | | A4 | - | - | - | 100 | - | 100 | - |
| | | A5 | - | - | - | - | 100 | - | - |
| | Polysiloxane compound B | | 0.4 | 0.4 | 0.4 | 0.8 | 0.02 | 0.4 | 0.4 |
| | Polymerization inhibitor | t-butylcatechol | 0.04 | - | 0.002 | - | 0.5 | 0.1 | - |
| | | 2,2,6,6-tetramethyl-4-hydroxypiperidin-1-oxyl | - | 0.04 | - | - | - | - | - |
| | | 4-methylcatechol | - | - | - | - | 0.12 | - | - |
| | | 2,2,6,6-tetramethylpiperidin -1-oxyl | - | - | - | 0.005 | - | - | - |
| | Silane coupling agent | 3-glycidoxypropyltriethoxysilane | - | - | 0.04 | - | - | 0.04 | - |
| High-pressure mercury lamp | UV irradiation dose [mJ/cm²] | | 3000 | 3000 | 3000 | - | 3000 | - | 3000 |
| Dryer | Curing temperature [°C] | | - | - | - | 120 | - | 120 | - |
| Evaluation | Appearance | | No cloudiness | No cloudiness | No cloudiness | No cloudiness | No cloudiness | No cloudiness | With cloudiness |
| | Haze | | 0.8 | 1.7 | 0.3 | 1.3 | 0.1 | 1.3 | 2.3 |
| | Transmittance [%] | | 89 | 89 | 89 | 91 | 88 | 89 | 89 |
| | YI | | 1.6 | 1.3 | 1.3 | 17 | 0.8 | 1.1 | 1.2 |
| | Scratch resistance | | 0.9 | 0.5 | 0.1 | 1.5 | 1.3 | 1.4 | 0.5 |

As shown in Table 1, it can be seen that according to the functional coating materials of Examples 1 to 6, it is possible to form a film (hard coating) with sufficiently low haze and sufficiently suppressed cloudiness.

## Claims

1. A functional coating material comprising a curable component, a polysiloxane compound having an amino group, and a polymerization inhibitor.

2. The functional coating material according to claim 1, wherein the curable component is a photocurable resin composition.

3. The functional coating material according to claim 1, wherein the curable component is a thermosetting resin composition.

4. The functional coating material according to claim 1, wherein the polysiloxane compound having an amino group has an amine equivalent of 500 to 5000 g/mol.

5. The functional coating material according to claim 1, wherein the polymerization inhibitor is a catechol compound.

6. The functional coating material according to claim 1, wherein the polymerization inhibitor is an aminoxyl compound.

7. The functional coating material according to claim 1, which is a hard coating material.

8. A hard coating consisting of a cured product of the functional coating material according to any one of claims 1 to 7.

9. The hard coating according to claim 8, wherein the haze is 2 or less.

10. A structure comprising a substrate and the hard coating according to claim 8 provided on the substrate.
